# EUROPEAN PATENT SPECIFICATION

(11) **EP 2 150 024 B1**
(45) Date of publication and mention of the grant of the patent: **18.05.2016**
(21) Application number: 09162341.3
(22) Date of filing: 10.06.2009
(51) Int. Cl.: H04L 29/06

(54) **Data stream comprising RTP packets and method and device for encoding/decoding such data stream**
Datenstrom mit RTP-Paketen sowie Verfahren und Vorrichtung zur Kodierung/Dekodierung eines solchen Datenstroms
Flux de données comprenant des paquets RTP, et procédé et dispositif pour coder/décoder un tel flux de données

(30) Priority: 28.07.2008 EP 08305424
(43) Date of publication of application: 03.02.2010
(73) Proprietor: Thomson Licensing, 92130 Issy-les-Moulineaux (FR)
(72) Inventor: Wu, Yuwen, 100031 Beijing (CN); Chen, Zhibo, 100085 Beijing (CN); Xia, Zhijin, 100082 Beijing (CN)
(74) Representative: Rittner, Karsten

(56) References cited:
- EP-A- 1 742 476
- WO-A-2006/134110

## Description

### Field of the invention

This invention relates to packetized real-time protocol (RTP) data streams that comprise application data of a multi-layer application. In particular, the invention relates to RTP-based scalable video transmission.

### Background

Various multi-layer multimedia applications exist, such as scalable video, scalable audio etc. The multimedia data are often transmitted through packetized data streams, whereby the multimedia data of the separate layers are time-multiplexed into a single data stream. In particular, the Scalable Video Coding (SVC) extension of H.264/AVC standard employs three types of scalability: temporal, spatial, and quality. The temporal scalability is well supported in H.264/AVC, and the base layer of SVC is deliberately designed to comply with H.264/AVC.

WO2006/134110 discloses an error concealment technique for decoding packetized H.264 (AVC) video data with enhanced spatial scalability. This is achieved by determining an application packet number of a missing or defective transport packet containing enhancement layer (EL) picture data, determining and upsampling a corresponding base-layer picture, and generating a new packet with default header and upsampled base-layer picture data before the decoding.

Typically, real-time video transmission over internet and mobile networks is based on RTP/IP. IETF has proposed an RTP payload format for SVC video. Further improvements can however be made to facilitate the decoding and rendering of RTP-based SVC bitstreams, whereby the transmission scheme can be kept compliant with general standard decoders.

Decoders may need some initial information, e.g. the number of total spatial and quality scalability layers in the case of scalable video. This initial information may help the decoder e.g. to initialize the memory allocation and related parameter configuration. Other information like layer dependency or frame type may also help decoders to be more efficient and robust.

However, transmission channels are usually error-prone. In the case of packet loss during transmission over such error-prone channel, some decoders may perform an error concealment process. But decoders often rely on the format of the transport stream, such as RTP. E.g. a standard RTP header contains timing information and the RTP packet number, which can be used to ensure that packets are decoded in the correct order. However, a further protocol is necessary for detecting if a packet is lost.

EP1742476A discloses a network streaming system for scalable video coding (SVC) data that considers a base layer bitstream as the most important information, and transmits it separately and with increased error protection compared to the less important enhancement information. The base layer and enhancement layer streams are transmitted in RTP through a TCP session and a UDP session respectively.

While TCP is used for common internet applications, TCP is too slow for real-time applications. Therefore, in real-time capable systems, an application decoder must handle the data loss situation and must find out alone which data are missing. This may disturb the application decoder, and in some cases it may even require its re-initialization.

### Summary of the Invention

For multi-layer applications, it has been found that the application decoder has different options for reacting on data loss, depending on the type of lost data packet and the application layer concerned. However, it is usually unknown to which application layer the missing packet belongs. A conventional multi-layer application decoder needs some processing time for recovering such situation. The quicker the type of lost data is known, the better a decoder can react. One problem to be solved by the invention is to provide to a decoder earlier and more detailed information about the type of lost data in the case of transport packet loss, particularly in terms of the concerned application.

The present invention provides a special syntax within a packet-based framework which is based on identifying and indicating the relationship between RTP packets and the application layer/frame they carry, before the packets are fed to the multi-layer application decoder. This helps the decoder to employ proper error concealment techniques in time, and prevents unnecessary processing in the decoder.

The present invention provides a data stream format that solves the above-mentioned problems, a corresponding encoding method and device and decoding method and device.

According to the data stream format, the data stream comprises RTP packets containing application data of a multi-layer application, wherein at least one RTP packet contains first application layer information relating to the contents of the next RTP packet, and second application layer information relating to the contents of the previous RTP packet (in transmission order).

According to one aspect of the invention, a method for encoding multi-layer application data using RTP packets comprises steps of packing a first, second and third portion of the multi-layer application data into a first, second and third RTP packet respectively, wherein the first, second and third portion of application data refers to a first, second and third layer of the application, adding in the second RTP packet at least first data defining the first layer of the application, to which the first packet refers, and second data defining the third layer of the application, to which the third packet refers, and transmitting the first, second and third RTP packet in this transmission order.

A respective device for encoding multi-layer application data using RTP packets comprises insertion means for packing a first, second and third portion of the multi-layer application data into a first, second and third RTP packet respectively, wherein the first, second and third portion of application data refers to a first, second and third layer of the application, insertion means for adding in the second RTP packet at least first data defining the first layer of the application, to which the first packet refers, and second data defining the third layer of the application, to which the third packet refers, and transmitting means for transmitting the first, second and third RTP packet (in this transmission order). The insertion means for packing a first, second and third portion of the multi-layer application data into a first, second and third RTP packet may process one, two or all three RTP packets sequentially or simultaneously. The insertion means for adding data in the second RTP packet may process and insert the first data and the second data sequentially or simultaneously into the second packet.

According to another aspect of the invention, a method for decoding (or in a way preparing the decoding) of RTP packets that comprise multi-layer application data comprises steps of receiving at least a first and a subsequent second RTP packet, extracting from the body of the first RTP packet a first portion of the multi-layer application data and from padding bytes of the first RTP packet first neighbor information, said first neighbor information defining at least the layer of multi-layer application data in the second RTP packet, extracting from the body of the second RTP packet a second portion of the multi-layer application data and from padding bytes of the second RTP packet second neighbor information, said second neighbor information defining at least the layer of multi-layer application data in the first RTP packet, determining the type of multi-layer application data in the first RTP packet and in the second RTP packet, comparing the determined type of multi-layer application data in the second RTP packet with the first neighbor information extracted from the first RTP packet, comparing the determined type of multi-layer application data in the first RTP packet with the second neighbor information extracted from the second RTP packet, comparing the first neighbor information extracted from the first RTP packet with the second neighbor information extracted from the second RTP packet, and providing the results of said steps of extracting and comparing towards a decoder for said multi-layer application.

A respective device for (preparing the) decoding of RTP packets that comprise multi-layer application data comprises receiving means for receiving at least a first and a subsequent second RTP packet, first extracting means for extracting from the body of the first RTP packet a first portion of the multi-layer application data and from padding bytes of the first RTP packet first neighbor information, said first neighbor information defining at least the layer of multi-layer application data in the second RTP packet, second extracting means for extracting from the body of the second RTP packet a second portion of the multi-layer application data and from padding bytes of the second RTP packet second neighbor information, said second neighbor information defining at least the layer of multi-layer application data in the first RTP packet, determining means for determining the type of multi-layer application data in the first RTP packet and in the second RTP packet, first comparing means for comparing the determined type of multi-layer application data in the second RTP packet with the first neighbor information extracted from the first RTP packet, second comparing means for comparing the determined type of multi-layer application data in the first RTP packet with the second neighbor information extracted from the second RTP packet, third comparing means for comparing the first neighbor information extracted from the first RTP packet with the second neighbor information extracted from the second RTP packet, and providing means for providing the results of the first and second extracting means, and the first, second and third comparing means towards a decoder for said multi-layer application.

Exemplarily, the multi-layer application data may be hierarchical data, with a base layer and one or more enhancement layers.

Advantageous embodiments of the invention are disclosed in the dependent claims, the following description and the figures.

### Brief description of the drawings

Exemplary embodiments of the invention are described with reference to the accompanying drawings, which show in
Fig.1 the structure of a data stream according to the invention;
Fig.2 the format of RTP packets with padding bytes;
Fig.3 a block diagram of the encoding;
Fig.4 a block diagram of the decoding preparation; and
Fig.5 the format of RTCP packets according to one aspect of the invention.

### Detailed description of the invention

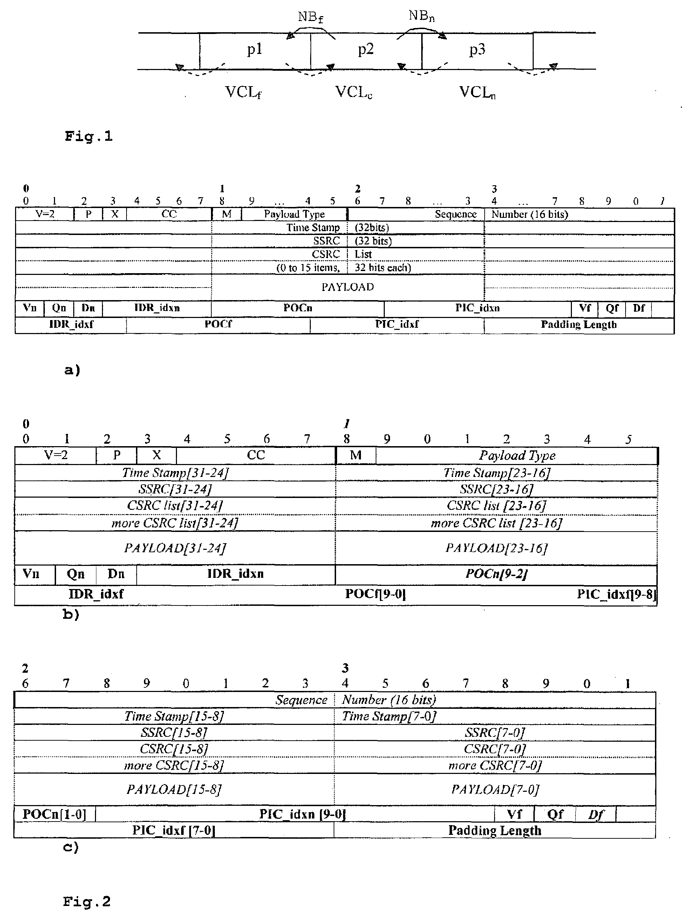

Fig.1 shows the structure of a packetized data stream. Successive packets p1,p2,p3 in the data stream comprise application data of a multi-layer application: a first packet p1 comprises application data of a first application layer VCLₚ, and subsequent second and third packets p2,p3 comprise application data of a second application layer VCL_{c} and a third application layer VCLₙ respectively. As depicted, the packets are transmitted/received in immediate sequence. If e.g. the real-time protocol (RTP) is used as transport protocol, the packets have RTP packet numbers. Therefore, the receiver can bring the packets in their correct sequence order, but if e.g. the second packet p2 is lost during transmission, the decoder would not know to which application layer the missing data belong. In this invention, a scheme of adding more information to the overhead of transport packets is proposed, for improving the efficiency of decoding and error concealment. This enables decoders to react in a more flexible manner. E.g. the decoder can find out that a missing packet belongs to an enhancement layer of the multi-layer application, and consequently it can continue decoding the base layer. Thus, the user may experience a temporal loss of quality, while conventionally the application would be interrupted. Instead, the application continues to run in a basic mode, e.g. a lower resolution.

As shown in Fig.1, the invention comprises that a transport packet with application data of a multi-layer application comprises information that specifies not only its own layer, but also two kinds of neighbour information, one NB_{f} that specifies the layer VCL_{f} of the application data in the preceding (f=former) transport packet, and one NBₙ that specifies the layer VCLₙ of the application data in the following (n=next) transport packet. Thus, it is possible to find out which type of application data is missing if one or two RTP packets are lost, which is the most probable case.

In the following, SVC based embodiments are described. As explained above, the invention is also applicable to other multi-layer multimedia applications. Like any other video decoder, the SVC decoder is sensitive to transmission errors. For SVC video transmission based on RTP, the packet loss could be lethal to the decoder if no effective error concealment techniques are used. Almost for every error concealment method, it is very important to know quickly to which slice/layer/frame the lost data belongs. This can be traditionally determined by decoding the received packets, but this appears to be an unnecessarily complex approach. Further, it induces the danger of software problems in the decoder, e.g. a crash. A further aspect of the problem is that a solution is needed for existing systems, such as RTP, without requiring a change of the packet format.

According to the present invention, some overhead information is inserted into the padding bytes of the RTP packets, in order to help the receiver getting the identity information of the lost packets before the data is fed to the SVC decoder. Consequently, the decoder can determine earlier than with conventional methods how to proceed with different solutions. E.g. one possible reaction is to abandon the whole slice to which the lost packet is related, and instead use the co-located slice of a previous picture, e.g. copy it to the current picture buffer.

Advantageously, this means a steady processing of the decoder and reduction of unnecessary computation.

By putting the identity information in the padding bytes, the scheme can be kept compliant with general standard SVC decoders, which disregard the padding bytes, and therefore the identity information, at all. The proposed method can support the error concealment in multi-layer decoders. In principle, basic SVC information of the next and the previous RTP packet after and before a current RTP packet is saved in a current RTP packet. With this method, the SVC decoder can perform the error concealment processing earlier and easier.

Fig.2 a) shows an overview over the structure of an RTP packet according to the invention. Fig.2 b) and c) show more details of the same packet. Each line in Fig.2 is one word of the packet having 32 bits. The 1^{st}-5^{th} words contain general header information, as specified below.

H.264 and SVC use a so-called network abstraction layer (NAL) to process and format encoded video data into packets, so called NAL units. The NAL units are mapped, usually in decoding order, to transport packets such as RTP packets for transmission. Different types of NAL units are defined. A NAL unit carries the actual picture data generated from macroblocks if its nal_type is equal to 1, 5 or 20. When nal_type is not equal to those values, the NAL carries control information, such as sequence parameter set (SPS) or picture parameter set (PPS). Each frame is encoded into one or more NAL units of nal_type equal to 1, 5 or 20 in SVC. If an RTP packet, and thus a NAL unit, of this kind is lost during delivery, the corresponding frame will not be decoded correctly. Since this is important information, we add a separate flag to inform the decoder that there was a loss of NAL with nal_type=1,5 or 20 beforehand.

V is a version field. Exemplarily V is set to V=2 in Fig.2. P is a one bit flag indicating additional padding bytes at the end of the RTP packet. If P=1, the packet contains one or more additional padding bytes at the end.
M is a one bit flag indicating whether an RTP packet is special, e.g. the last RTP packet of the current slice. Other conventional fields in RTP packet headers are payload type, time stamp, synchronization source ID (SSRC) and contributing sources (CSRC) fields. The payload contains the actual video data. While exemplarily two payload words are shown, the packets carry usually more payload. After the payload, the padding bytes as indicated by the P flag follow.

According to the invention, additional application-related information about the former and the next RTP packet is stored the padding bytes. E.g. SVC defines the structure shown in Tab.1, and corresponding structure-related parameters.

**Tab.1 : Exemplary scalability structure in SVC**

| | | Layer |
|---|---|---|
| dependency_id=2 | Quality layer; quality_id=1 | F |
| | Spatial resolution: 4CIF (704x576) | |
| | Quality layer; quality_id=0 | E |
| | Spatial resolution: 4CIF (704x576) | |
| | | |
| dependency_id=1 | Quality layer; quality_id=0 | D |
| | Spatial resolution: CIF (352x288) | |
| | | |
| dependency_id=0 | Quality layer; quality_id=2 | C |
| | Spatial resolution: QCIF (176x144) | |
| | Quality layer; quality_id=1 | B |
| | Spatial resolution: QCIF (176x144) | |
| | Quality layer; quality_id=0 | A |
| | Spatial resolution: QCIF (176x144) | |

The structure shown in Tab.1 is an example. There are in total seven layers: A-F. The base layer is A,D,E. All the quality layers B,C,F have the same spatial resolution as their respective base layer. The spatial layers D,E have different spatial resolution than their base layers.

The layer named "quality layer" is generated by quality scalability, which is one kind of scalability in SVC. SVC demands that the quality layer has the same spatial resolution as its base layer. The encoding type of quality scalability layer is different from the spatial scalability layer. So the decoding approach and the method to handle a NAL unit loss for quality layer data are different than those for spatial scalability data. "quality_id" is the syntax element to indicate the ID of each quality layer in SVC bit streams.

The "dependency_id" is used in SVC to indicate the spatial layer. Eight spatial layers are allowed. A spatial layer has different spatial resolution than its base layer (or reference layer), if a base layer exists. With the syntax element "dependency_id", we know to which spatial layer the current layer belongs. If quality_id=0, this means that the current layer is a spatial layer, and should be decoded as a spatial layer. Otherwise, the current layer should be decoded as quality layer.

In principle "dependency_id" indicates a change of spatial resolution, and "quality_id" indicates a change of the encoding approach.

This information would be useful to have in an SVC decoder.

In one embodiment of the invention, the following information is contained in the padding bytes (indices n and f refer to the next or former packet respectively):
**Vn:** one bit flag. Vn=1 indicates that the nal_type of the NAL unit carried by the next RTP packet (in transmitting order) equals to 1, 5 or 20. This means that the next packet contains macroblock data, i.e. the actual picture data. Each video frame is encoded into one or more NAL units of nal_type = 1, 5 or 20.
**Qn:** One bit flag. Qn=1 indicates that the next NAL unit carried by the following RTP packet belongs to a quality layer (quality_id > 0). Otherwise, Qn=0 and the following RTP packet belongs to a spatial layer.
**Dn:** One bit flag. Dn=1 indicates that the next NAL carried by the following RTP packet has same value of dependency_id as the current NAL. Otherwise, Dn=0.
**POCn:** 10 bit unsigned integer, indicates the POC number of the next NAL carried by the following RTP packet.
**PIC_idxn:** 10 bits unsigned integer, indicates the IDR number of the next NAL carried by the following RTP packet. It is incremented by one each time when a new NAL with nal_type=5 is processed. When it reaches the maximum value 1023, it returns to zero.
   When Vn=1, this means that the nal_type of the NAL carried by the next RTP packet (transmitting order) equals to 1, 5 or 20: all the values of the Vn, Qn, Dn, POCn and PIC_idxn flags relate to the NAL in the next RTP packet. Otherwise, if Vn=0, all those values relate to the next NAL (saving order in SVC bit stream) which is in a later RTP packet.
**Vf:** one bit flag. Vf=1 indicates the nal_type of the NAL carried by the former RTP packet (that is: the immediately preceding packet in transmitting order) equals to 1, 5 or 20.
**Qf:** One bit flag. Qf=1 indicates the NAL carried by the former RTP packet belongs to a quality layer (quality_id > 0). Otherwise, Qf=0.
**Df:** One bit flag. Df=1 indicates the NAL carried by the former RTP packet has same value of dependency_id as the current NAL. Otherwise, Df=0;
**POCf:** 10 bits unsigned integer, indicates the POC number of the NAL carried by the former RTP packet.
**PIC_idxf:** 10 bits unsigned integer, indicates the IDR number of the NAL carried by the former RTP packet. It is incremented by one each time a new NAL with nal_type = 5 is processed. When it reaches the maximum value 1023, it returns to zero.

Another, optional parameter is **Padding length:** This is the number of padding bytes, including itself. The padding bytes are not necessarily aligned on 32-bit border.

The flag Vx (x=n or f) indicates whether the NAL of the next/former RTP packet is a VCL NAL. With the information offered by flag Qx, the decoder can easily know whether the NAL in the next/former RTP package belongs to a quality layer. With the flag Dx, the spatial/CGS layer can be obtained easily.

If a single RTP packet is lost, error concealment should be performed by the SVC decoder if Vn=1 and Qn=0 (i.e. spatial layer with picture data). In this case, required picture data are missing. The frame, to which the lost NAL belongs, can be determined according to POCn, and a simple and fast error concealment algorithm can be utilized in the SVC decoder.

If several consecutive RTP packets are lost, the SVC decoder should perform error concealment if Vn=1 and Qn=0 or Vf=1 and Qf=1. With the information of Dn, POCn and PIC_idxn in the RTP before the first lost RTP packet and the information of Df, POCf and PIC_idxf in the RTP after the last lost RTP packet, the number of lost pictures and their GOP and layer information can be determined, and can then be offered to the SVC decoder. This information will help the SVC decoder perform simple and fast error concealment.

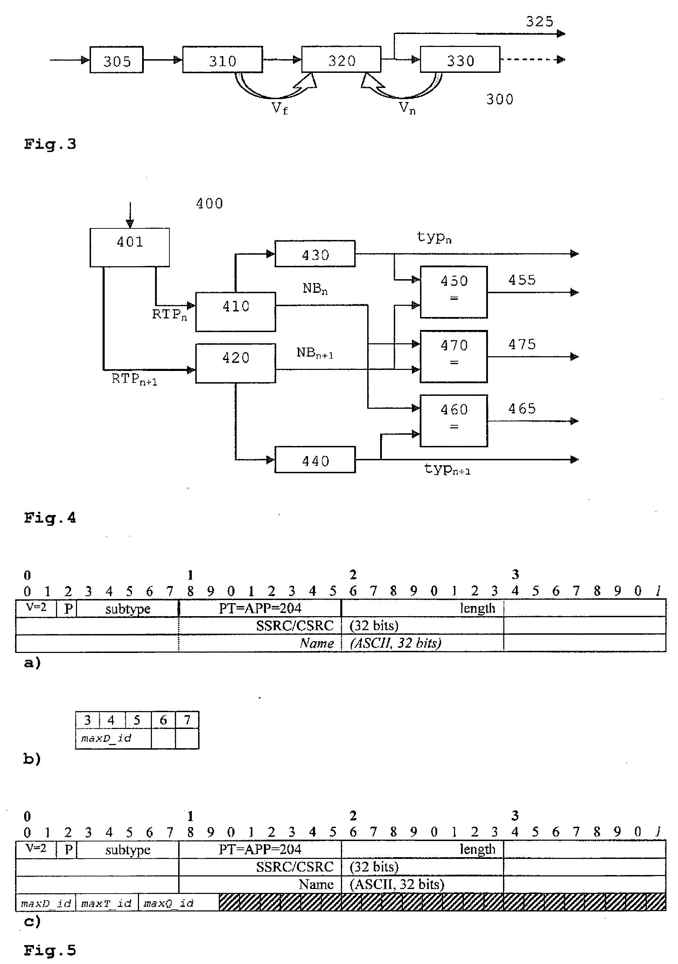

Fig.3 shows a block diagram for encoding, according to one aspect of the invention. In one embodiment, the encoding method comprises steps of packing or inserting 305 at least first, second and third consecutive portions of multi-layer application data into respective first, second and third RTP packets p₁,p₂,p₃. As described above, the different portions of application data refer to a first, second and third layer VCL_{f}, VCL_{c}, VCLₙ of the application. The layers may be different, or any two or all three packets may refer to the same layer.

In the next step 320, at least first data Vf defining the first layer of the application (to which the former, first packet refers) and second data Vn defining the third layer of the application (to which the following, third packet refers) are added in the second RTP packet. Particularly, this information is added in padding bytes, as described above. In a third step, the first, second and third RTP packets are transmitted 325 (in this order).

In another embodiment however it is sufficient to encode a single packet at a time, as long as it gets application layer information about the respective previous and next packet inserted, which may be temporarily buffered.

Fig.3 can also be understood as showing the general structure of an encoder according to one aspect of the invention. Such encoder for encoding multi-layer application data using RTP packets comprises insertion means 305 for packing a first, second and third portion of the multi-layer application data into a first, second and third RTP packet p₁,p₂,p₃ respectively, wherein the first, second and third portion of application data refers to a first, second and third application layer, insertion means 320 for adding in the second RTP packet at least first application layer data referring to the first (= previous) packet and second application layer data relating to the third (= next) packet, and transmitting means 340 for transmitting the first, second and third RTP packet (in this order).

Fig.4 shows a block diagram of the principle of the decoding preparation, to be performed before the actual application layer decoding. Actual implementations may be more sophisticated or e.g. integrated into a decoder.

The method is for preparing the decoding of RTP packets that comprise multi-layer application data, and comprises steps of receiving 401 at least a first and a subsequent second RTP packet, extracting 410 from the body of the first RTP packet a first portion of the multi-layer application data 415 and from padding bytes of the first RTP packet first neighbor information NBₙ, and in the same manner extracting 420 from the body of the second RTP packet a second portion of the multi-layer application data 425 and from padding bytes of the second RTP packet second neighbor information NB_{f}. As described above, the neighbor information comprises at least one of the Vn,Qn,Dn,POCn and PIC_idxn as far as the next packet is concerned, and at least one of Vf,Qf,Df,POCf and PIC_idxf as far as the previous packet is concerned.

In the next step, the type of multi-layer application data in the first RTP packet typₙ and in the second RTP packet typₙ₊₁ is determined 430,440.

The next step is comparing 450 the determined type typₙ₊₁ of multi-layer application data in the second RTP packet with the first neighbor information NBₙ extracted from the first RTP packet, and/or comparing 460 the determined type typₙ of multi-layer application data in the first RTP packet with the second neighbor information NB_{f} extracted from the second RTP packet. If both comparisons are performed, they can bring three different results, as described below.

In the next step, the first neighbor information NBₙ extracted from the first RTP packet and the second neighbor information NB_{f} extracted from the second RTP packet are compared 470. If both are equal and a packet is missing, it can be concluded that only one packet is missing. If both are different and a packet is missing, it can be concluded that more than one packet is missing.

Then, the results of said extracting and comparing are provided to a decoder for said multi-layer application, which can then react very fast in an appropriate manner, since it does not have to perform a long lasting analysis of missing information.
One comparison result signal 455 indicates whether the type of a current packet is as indicated in the following packet. One comparison result signal 465 indicates whether the packet type of a current packet is as indicated in the previous packet. These two 455,465 signals are regarded as first order comparison results, since they indicate whether data is missing. One comparison result signal 475 indicates whether the packet type indicated as "next" in a previous packet and the packet type indicated as "previous" in a current packet are equal. This is a second order comparison result, since it is only relevant in the case that data is missing.

In one embodiment, all these comparison result signals together with the expected next and previous packet types typₙ, typₙ₊₁ are delivered to the multi-layer application decoder. The decoder can utilize the information as described below.

Exemplarily, the reception and evaluation of only two consecutive packets is described, since with two received packets three different situations may occur:

In a 1.case, the "next" information in the 1st packet is equal to the packet type of the 2nd packet, and the "previous" information in the 2nd packet is equal to the packet type of the 1st packet. In this case, the first order comparison result signals 455 and 465 indicate that everything is ok and no packet is lost.

In a 2.case, the "next" information in the 1st packet is different from the actual packet type of the 2nd packet (or the "previous" information in a 2^{nd} packet is different from the actual packet type of a 1^{st} packet), and further the "next" information in the 1st packet is equal to the "previous" information in the 2nd packet. In other words, at least one of the first order signals 455,465 indicate that data is missing, and the second order signal 475 indicates that both packets indicate the same type of missing data. In this case, it can be concluded that only one packet between the 1^{st} and the 2^{nd} packet is missing, and its type is known from the "next" and "previous" information.

In a 3.case, the "next" information in the 1st packet is different from the actual packet type of the 2nd packet (or the "previous" information in a 2^{nd} packet is different from the actual packet type of a 1^{st} packet), and further the "previous" information in the 2^{nd} packet is different from the "next" information in the 1^{st} packet. In other words, at least one of the first order signals 455,465 indicate that data is missing, and the second order signal 475 indicates that both packets indicate different types of missing data. In this case, it can be concluded that at least two packets between the 1^{st} and the 2^{nd} packet are missing.

With this information provided, the multi-layer application decoder can react according to the current situation very fast.

In one embodiment, further help is provided to the decoder by additional packets. In the RTP protocol, RTCP packets can be used for this purpose. Fig.5 shows how to effectively utilize RTCP packets to transmit additional information to the decoder. Advantageously, in this way structural information can be transmitted that allows faster decoder initialization.

In one embodiment, the number of (spatial and/or quality) layers is sent to the receiver within an application-defined RTCP packet. It is intended to facilitate the initialization of the decoder, and for the sake of random accessing, the information can be sent out periodically, e.g. as frequently as the IDR frame or SPS. Fig.5 shows a format of such RTCP packet, in which several fields are explained below.

"Subtype": can be used together with the "Name" field to identify the content of the packet.
"Length": gives the length of this RTCP packet in 32-bit words minus one, including the header. Default is 2. "Name": is interpreted as a sequence of four ASCII characters, with uppercase and lowercase characters treated distinctly. The "Name" can be used to indicate the SVC related RTP-based application. For initializing the SVC decoder or decoding procedure, the receiver may quickly get the holistic information of the received SVC bit-stream. Two kinds of methods are possible to insert the information for SVC decoder initialization in RTCP packets.

Case 1: The "Subtype" field is always used with the "Name" field to identify the content of the packet. If the "Name" field indicates that the payload in the RTP package is an SVC bit stream, then any three bits can be used to indicate the maximal value of syntax element "dependency_id" in the SVC bit stream. Exemplarily, we use the first three bits to save this value, as shown in Fig.5 b). **maxD_id** is an unsigned three bit integer to indicate the maximal value of "dependency_id" in the SVC bit stream which will be sent. The maximal value of "dependency_id" indicates the total layers of spatial/CGS in the SVC bit stream. This value is very important for SVC decoder basic initialization. For local bit stream playing, this value can be obtained by checking SVC bit stream dependency. But for error-prone (e.g. network based) SVC application, the maximal value of "dependency_id" obtained by checking the SVC bit stream dependency may be wrong due to packet loss. The value of the maxD_id can be used by the receiver to initialize SVC decoder.

Another way to initially deliver the layer information is to add excess payload at the end of the "Name" field, as shown in Fig.5 c). **maxD_id** is as described above. **maxT_id** has three bits to indicate the maximal value of syntax element "temporal_id" in the SVC bit stream. **maxQ_id** has four bits to indicate the maximal value of syntax element "quality_id" in the SVC bit stream.

The default value of "length" is two. When "Name" indicates an SVC related application and "Length" is not equal to the default value, then the 10 bits next to the "Name" field save the maxD_id, maxT_id and maxQ_id. On the receiver side, maxD_id can be used for the basic initialization of the SVC decoder, and maxT_id and maxQ_id can be used for enhanced SVC decoder initialization. An advantage for the decoder is that it does not need to analyze the data stream for determining the parameters before the actual decoding starts. Therefore the initialization is faster, and the decoding can start earlier.

It will be understood that the present invention has been described purely by way of example, and modifications of detail can be made without departing from the scope of the invention. Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. Method for encoding multi-layer application data using RTP packets, comprising steps of
- packing (305) a first, second and third portion of the multi-layer application data into a first, second and third RTP packet respectively (p₁,p₂,p₃), wherein the first, second and third portion of application data refers to a first, second and third layer (VCL_{f}, VCL_{c}, VCLₙ) of the application;
- adding (320) in the second RTP packet at least first data (v_{f}) defining the first layer of the application, to which the first packet refers, and second data (vₙ) defining the third layer of the application, to which the third packet refers; and
- transmitting (325) the first, second and third RTP packet in this order.

2. Method according to claim 1, wherein the first data and the second data are added within padding bytes of the second packet.

3. Method according to claim 1 or 2, wherein the first data (v_{f}) defining the first layer (VCL_{f}) of the application and second data (vₙ) defining the third layer (VCLₙ) of the application comprise one or more of NAL type indication (Vₙ,V_{f}), quality information (Qₙ,Q_{f}), dependency information (Dₙ,D_{f}), IDR number (PIC_idxₙ, PIC_idx_{f}) and picture order count (POCₙ,POC_{f}) information.

4. Method according to claim 3, wherein the first data (v_{f}) or the second data (vₙ) comprise a flag (Vₙ,V_{f}) indicating that the application data of the previous or next packet refers to one or more particular NAL types.

5. Method according to any of claims 1-4, wherein the first, second and third packets are transmitted in immediate sequence.

6. Method for preparing the decoding of RTP packets that comprise multi-layer application data, the method comprising steps of
- receiving (401) at least a first and a subsequent second RTP packet;
- extracting (410) from the body of the first RTP packet a first portion of the multi-layer application data (415) and from padding bytes of the first RTP packet first neighbor information (NBₙ), said first neighbor information defining at least the layer of multi-layer application data in the second RTP packet;
- extracting (420) from the body of the second RTP packet a second portion of the multi-layer application data (425) and from padding bytes of the second RTP packet second neighbor information (NB_{f}), said second neighbor information defining at least the layer of multi-layer application data in the first RTP packet;
- determining (430,440) the type of multi-layer application data (typₙ₊₁, typₙ₊₁) in the first RTP packet and in the second RTP packet;
- comparing (450) the determined type (typₙ₊₁) of multi-layer application data in the second RTP packet with the first neighbor information (NBₙ) extracted from the first RTP packet;
- comparing (460) the determined type (typₙ) of multi-layer application data in the first RTP packet with the second neighbor information (NB_{f}) extracted from the second RTP packet;
- comparing (470) the first neighbor information (NBₙ) extracted from the first RTP packet with the second neighbor information (NB_{f}) extracted from the second RTP packet; and
- providing the results of said steps of extracting (430,440) and comparing (450,460,470) towards a decoder for said multi-layer application.

7. Method according to claim 6, wherein the neighbor information in the first and second RTP packets comprise one or more of NAL type indication (Vₙ,V_{f}), quality information (Qₙ, Q_{f}), prediction dependency information (Dₙ,D_{f}), IDR number (PIC_idxₙ,PIC_idx_{f}) and picture order count (POCₙ,POC_{f}) information.

8. Method according to claim 6 or 7, wherein the first portion and second portion of the multi-layer application data belong to different layers of the multi-layer application.

9. Apparatus for encoding multi-layer application data using RTP packets, comprising
- insertion means (305) for packing a first, second and third portion of the multi-layer application data into a first, second and third RTP packet respectively (p₁,p₂,p₃), wherein the first, second and third portion of application data refers to a first, second and third layer (VCL_{f}, VCL_{c}, VCLₙ) of the application;
- insertion means (320) for adding in the second RTP packet at least first data (v_{f}) defining the first layer of the application, to which the first packet refers, and second data (vₙ) defining the third layer of the application, to which the third packet refers; and
- transmitting means (340) for transmitting the first, second and third RTP packet in this order.

10. Apparatus according to claim 9, wherein the first data and the second data are added within padding bytes of the second packet.

11. Apparatus (400) for preparing the decoding of RTP packets that comprise multi-layer application data, the apparatus comprising
- receiving means (401) for receiving at least a first and a subsequent second RTP packet;
- first extracting means (410) for extracting from the body of the first RTP packet a first portion of the multi-layer application data (415) and from padding bytes of the first RTP packet first neighbor information (NBₙ), said first neighbor information defining at least the layer of multi-layer application data in the second RTP packet;
- second extracting means (420) for extracting from the body of the second RTP packet a second portion of the multi-layer application data (425) and from padding bytes of the second RTP packet second neighbor information (NB_{f}), said second neighbor information defining at least the layer of multi-layer application data in the first RTP packet;
- determining means (430,440) for determining the type of multi-layer application data (typₙ₊₁, typₙ₊₁) in the first RTP packet and in the second RTP packet;
- first comparing means (450) for comparing the determined type (typₙ₊₁) of multi-layer application data in the second RTP packet with the first neighbor information (NBₙ) extracted from the first RTP packet;
- second comparing means (460) for comparing the determined type (typₙ) of multi-layer application data in the first RTP packet with the second neighbor information (NB_{f}) extracted from the second RTP packet;
- third comparing means (470) for comparing the first neighbor information (NBₙ) extracted from the first RTP packet with the second neighbor information (NB_{f}) extracted from the second RTP packet; and
- providing means for providing the results of the first and second extracting means (430,440), and the first, second and third comparing means (450,460,470) towards a decoder for said multi-layer application.

12. Apparatus according to claim 11, wherein the neighbor information (NBₙ,NB_{f}) in the first and second RTP packets comprise one or more of NAL type indication (Vₙ,V_{f}), quality information (Qₙ, Q_{f}), prediction dependency information (Dₙ,D_{f}), IDR number (PIC_idxₙ,PIC_idx_{f}) and picture order count (POCₙ,POC_{f}) information.

13. Apparatus according to claim 11 or 12, wherein the first portion and second portion of the multi-layer application data belong to different layers of the multi-layer application.

## Patentansprüche

1. Verfahren zum Codieren von Mehrschichtanwendungsdaten unter Verwendung von RTP-Paketen, wobei das Verfahren die folgenden Schritte umfasst:
- Packen (305) eines ersten, eines zweiten und eines dritten Abschnitts der Mehrschichtanwendungsdaten in dieser Reihenfolge in ein erstes, in ein zweites und in ein drittes RTP-Paket (p₁, p₂, p₃), wobei sich der erste, der zweite und der dritte Abschnitt der Anwendungsdaten auf eine erste, auf eine zweite und auf eine dritte Schicht (VCL_{f}, VCL_{c}, VCLₙ) der Anwendung beziehen;
- Hinzufügen (320) mindestens erster Daten (v_{f}), die die erste Schicht der Anwendung definieren, auf die sich das erste Paket bezieht, und zweiter Daten (vₙ), die die dritte Schicht der Anwendung definieren, auf die sich das dritte Paket bezieht, in dem zweiten RTP-Paket; und
- Senden (325) des ersten, des zweiten und des dritten RTP-Pakets in dieser Reihenfolge.

2. Verfahren nach Anspruch 1, wobei die ersten Daten und die zweiten Daten in Füllbytes des zweiten Pakets hinzugefügt werden.

3. Verfahren nach Anspruch 1 oder 2, wobei die ersten Daten (v_{f}), die die erste Schicht (VCL_{f}) der Anwendung definieren, und die zweiten Daten (vₙ), die die dritte Schicht (VCLₙ) der Anwendung definieren, eine NAL-Typ-Angabe (Vₙ, V_{f}) und/oder Qualitätsinformationen (Qₙ, Q_{f}) und/oder Abhängigkeitsinformationen (Dₙ, D_{f}) und/oder eine IDR-Zahl (PIC_idxₙ, PIC_idx_{f}) und/oder Bildreihenfolgezählinformationen (POCₙ-, POC_{f}-Informationen) umfassen.

4. Verfahren nach Anspruch 3, wobei die ersten Daten (v_{f}) oder die zweiten Daten (vₙ) einen Merker (Vₙ, V_{f}) umfassen, der angibt, dass sich die Anwendungsdaten des vorhergehenden oder des nächsten Pakets auf einen oder auf mehrere bestimmte NAL-Typen beziehen.

5. Verfahren nach einem der Ansprüche 1-4, wobei das erste, das zweite und das dritte Paket in unmittelbarer Folge gesendet werden.

6. Verfahren für das Vorbereiten der Decodierung von RTP-Paketen, die Mehrschichtanwendungsdaten umfassen, wobei das Verfahren die folgenden Schritte umfasst:
- Empfangen (401) mindestens eines ersten und eines nachfolgenden zweiten RTP-Pakets;
- Extrahieren (410) eines ersten Abschnitts der Mehrschichtanwendungsdaten (415) aus dem Hauptteil des ersten RTP-Pakets und erster Nachbarinformationen (NBₙ) aus Füllbytes des ersten RTP-Pakets, wobei die ersten Nachbarinformationen mindestens die Schicht der Mehrschichtanwendungsdaten in dem zweiten RTP-Paket definieren;
- Extrahieren (420) eines zweiten Abschnitts der Mehrschichtanwendungsdaten (425) aus dem Hauptteil des zweiten RTP-Pakets und zweiter Nachbarinformationen (NB_{f}) aus Füllbytes des zweiten RTP-Pakets, wobei die zweiten Nachbarinformationen mindestens die Schicht der Mehrschichtanwendungsdaten in dem ersten RTP-Paket definieren;
- Bestimmen (430, 440) des Typs der Mehrschichtanwendungsdaten (Typₙ₊₁, Typₙ₊₁) in dem ersten RTP-Paket und in dem zweiten RTP-Paket;
- Vergleichen (450) des bestimmten Typs (Typₙ₊₁) der Mehrschichtanwendungsdaten in dem zweiten RTP-Paket mit den aus dem ersten RTP-Paket extrahierten ersten Nachbarinformationen (NBₙ);
- Vergleichen (460) des bestimmten Typs (Typₙ) von Mehrschichtanwendungsdaten in dem ersten RTP-Paket mit den aus dem zweiten RTP-Paket extrahierten zweiten Nachbarinformationen (NB_{f});
- Vergleichen (470) der aus dem ersten RTP-Paket extrahierten ersten Nachbarinformationen (NBₙ) mit den aus dem zweiten RTP-Paket extrahierten zweiten Nachbarinformationen (NB_{f}); und
- Bereitstellen der Ergebnisse der Schritte des Extrahierens (430, 440) und des Vergleichens (450, 460, 470) für einen Decodierer der Mehrschichtanwendung.

7. Verfahren nach Anspruch 6, wobei die Nachbarinformationen in dem ersten und in dem zweiten RTP-Paket eine oder mehr Informationen umfassen aus: NAL-Typ-Angabe (Vₙ, V_{f}), Qualitätsinformationen (Qₙ, Q_{f}), Vorhersageabhängigkeitsinformationen (Dₙ, D_{f}), eine IDR-Zahl (PIC_idxₙ, PIC_idx_{f}) und Bildreihenfolgezählinformationen (POCₙ-, POC_{f}-Informationen).

8. Verfahren nach Anspruch 6 oder 7, wobei der erste Abschnitt und der zweite Abschnitt der Mehrschichtanwendungsdaten zu unterschiedlichen Schichten der Mehrschichtanwendung gehören.

9. Vorrichtung zum Codieren von Mehrschichtanwendungsdaten unter Verwendung von RTP-Paketen, wobei die Vorrichtung umfasst:
- Einfügemittel (305) zum Packen eines ersten, eines zweiten und eines dritten Abschnitts der Mehrschichtanwendungsdaten in dieser Reihenfolge in ein erstes, in ein zweites und in ein drittes RTP-Paket (p₁, p₂, p₃), wobei sich der erste, der zweite und der dritte Abschnitt der Anwendungsdaten auf eine erste, auf eine zweite und auf eine dritte Schicht (VCL_{f}, VCL_{c}, VCLₙ) der Anwendung beziehen;
- Einfügemittel (320) zum Hinzufügen mindestens erster Daten (v_{f}), die die erste Schicht der Anwendung definieren, auf die sich das erste Paket bezieht, und zweiter Daten (vₙ), die die dritte Schicht der Anwendung definieren, auf die sich das dritte Paket bezieht, in dem zweiten RTP-Paket; und
- Sendemittel (340), um das erste, das zweite und das dritte RTP-Paket in dieser Reihenfolge zu senden.

10. Vorrichtung nach Anspruch 9, wobei die ersten Daten und die zweiten Daten in Füllbytes des zweiten Pakets hinzugefügt werden.

11. Vorrichtung (400) zum Vorbereiten des Decodierens von RTP-Paketen, die Mehrschichtanwendungsdaten umfassen, wobei die Vorrichtung umfasst:
- Empfangsmittel (401) zum Empfangen mindestens eines ersten und eines nachfolgenden zweiten RTP-Pakets;
- erste Extrahiermittel (410) zum Extrahieren eines ersten Abschnitts der Mehrschichtanwendungsdaten (415) aus dem Hauptteil des ersten RTP-Pakets und erster Nachbarinformationen (NBₙ) aus Füllbytes des ersten RTP-Pakets, wobei die ersten Nachbarinformationen mindestens die Schicht der Mehrschichtanwendungsdaten in dem zweiten RTP-Paket definieren;
- zweite Extrahiermittel (420) zum Extrahieren eines zweiten Abschnitts der Mehrschichtanwendungsdaten (425) aus dem Hauptteil des zweiten RTP-Pakets und zweiter Nachbarinformationen (NB_{f}) aus Füllbytes des zweiten RTP-Pakets, wobei die zweiten Nachbarinformationen mindestens die Schicht der Mehrschichtanwendungsdaten in dem ersten RTP-Paket definieren;
- Bestimmungsmittel (430, 440) zum Bestimmen des Typs von Mehrschichtanwendungsdaten (Typₙ₊₁, Typₙ₊₁) in dem ersten RTP-Paket und in dem zweiten RTP-Paket;
- erste Vergleichsmittel (450) zum Vergleichen des bestimmten Typs (Typₙ₊₁) von Mehrschichtanwendungsdaten in dem zweiten RTP-Paket mit den aus dem ersten RTP-Paket extrahierten ersten Nachbarinformationen (NBₙ);
- zweite Vergleichsmittel (460) zum Vergleichen des bestimmten Typs (Typₙ) der Mehrschichtanwendungsdaten in dem ersten RTP-Paket mit den aus dem zweiten RTP-Paket extrahierten zweiten Nachbarinformationen (NB_{f});
- dritte Vergleichsmittel (470) zum Vergleichen der aus dem ersten RTP-Paket extrahierten ersten Nachbarinformationen (NBₙ) mit den aus dem zweiten RTP-Paket extrahierten zweiten Nachbarinformationen (NB_{f});und
- Bereitstellungsmittel zum Bereitstellen der Ergebnisse der ersten und der zweiten Extraktionsmittel (430, 440) und der ersten, der zweiten und der dritten Vergleichsmittel (450, 460, 470) für einen Decodierer für die Mehrschichtanwendung.

12. Vorrichtung nach Anspruch 11, wobei die Nachbarinformationen (NBₙ, NB_{f}) in dem ersten und in dem zweiten RTP-Paket eine oder mehr Informationen umfassen aus: NAL-Typ-Angabe (Vₙ, V_{f}), Qualitätsinformationen (Qₙ, Q_{f}), Vorhersageabhängigkeitsinformationen (Dₙ, D_{f}), eine IDR-Zahl (PIC_idxₙ, PIC_idx_{f}) und Bildreihenfolgezählinformationen (POCₙ-, POC_{f}-Informationen).

13. Vorrichtung nach Anspruch 11 oder 12, wobei der erste Abschnitt und der zweite Abschnitt der Mehrschichtanwendungsdaten zu unterschiedlichen Schichten der Mehrschichtanwendung gehören.

## Revendications

1. Procédé pour coder des données d'application multicouche avec des paquets RTP, comprenant les étapes suivantes :
- intégration (305) d'une première, d'une deuxième et d'une troisième parties des données d'application multicouche à un premier, un deuxième et un troisième paquets RTP respectivement (P₁,P₂,P₃), dans laquelle la première, la deuxième et la troisième parties des données d'application font référence une première, une deuxième et une troisième couches (VCL_{f}, VCL_{c}, VCLₙ) de l'application ;
- ajout (320) dans le deuxième paquet RTP au moins des premières données (v_{f}) définissant la première couche de l'application, à laquelle le premier paquet fait référence, et des deuxièmes données (vₙ) définissant la troisième couche de l'application, à laquelle le troisième paquet fait référence ; et
- transmission (325) du premier, du deuxième et du troisième paquets dans cet ordre.

2. Procédé selon la revendication 1, dans lequel les premières et les deuxièmes données sont ajoutées dans des octets de remplissage du deuxième paquet.

3. Procédé selon la revendication 1 ou 2, dans lequel les premières données (v_{f}) définissant la première couche (VCL_{f}) de l'application et les deuxièmes données (vₙ) définissant la troisième couche (VCLₙ) de l'application comprennent au moins une indication de type (Vₙ,V_{f}), une information de qualité (Qₙ,Q_{f}), une information de dépendance (Dₙ,D_{f}), un numéro IDR (PIC_idxₙ, PIC_idx_{f}) et une information de compte d'ordre d'image (POCₙ,POC_{f}) pour la NAL.

4. Procédé selon la revendication 3, dans lequel les premières données (v_{f}) ou les deuxièmes données (vₙ) comprennent un indicateur (Vₙ,V_{f}) indiquant que les données d'application du paquet précédent ou suivant font référence à un ou plusieurs types de NAL spécifiques.

5. Procédé selon l'une des revendications 1 à 4, dans lequel le premier, le deuxième et le troisième paquets sont transmis immédiatement les uns à la suite des autres.

6. Procédé permettant de préparer le décodage de paquets RTP comprenant des données d'application multicouche, le procédé comprenant les étapes suivantes :
- réception (401) d'au moins un premier paquet RTP, puis d'un deuxième ;
- extraction (410) du corps du premier paquet RTP d'une première partie des données d'application multicouche (415) et des octets de remplissage du premier paquet RTP des premières informations de voisinage (NBₙ), lesdites premières informations de voisinage définissant au moins la couche de données d'application multicouche du deuxième paquet RTP ;
- extraction (420) du corps du deuxième paquet RTP d'une deuxième partie des données d'application multicouche (425) et des octets de remplissage du deuxième paquet RTP des deuxièmes informations de voisinage (NB_{f}), lesdites deuxièmes informations de voisinage définissant au moins la couche de données d'application multicouche du premier paquet RTP ;
- détermination (430,440) du type de données d'application multicouche (typₙ₊₁, typₙ₊₁) du premier paquet RTP et du deuxième paquet RTP ;
- comparaison (450) du type déterminé (typₙ₊₁) de données d'application multicouche du deuxième paquet RTP aux premières informations de voisinage (NBₙ) extraites du premier paquet RTP ;
- comparaison (460) du type déterminé (typₙ) de données d'application multicouche du premier paquet RTP aux deuxièmes informations de voisinage (NB_{f}) extraites du deuxième paquet RTP ;
- comparaison (470) des premières informations de voisinage (NBₙ) extraites du premier paquet RTP aux deuxièmes informations de voisinage (NB_{f}) extraites du deuxième paquet RTP ; et
- transmission des résultats desdites étapes d'extraction (430,440) et de comparaison (450,460,470) à un décodeur pour ladite application multicouche.

7. Procédé selon la revendication 6, dans lequel les informations de voisinage du premier et du deuxième paquets RTP comprennent au moins une indication de type (Vₙ,V_{f}), une information de qualité (Qₙ, Q_{f}), une information de dépendance prédictive (Dₙ,D_{f}), un numéro IDR (PIC_idxₙ, PIC_idx_{f}) et une information de compte d'ordre d'image (POCₙ, POC_{f}) pour la NAL.

8. Procédé selon la revendication 6 ou 7, dans lequel la première partie et la deuxième partie des données d'application multicouche appartiennent à différentes couches de l'application multicouche.

9. Appareil pour coder des données d'application multicouche avec des paquets RTP, comprenant :
- un moyen d'insertion (305) pour intégrer une première, une deuxième et une troisième parties des données d'application multicouche à un premier, un deuxième et un troisième paquets RTP respectivement (P₁, P₂, P₃), dans lequel la première, la deuxième et la troisième parties des données d'application font référence à une première, une deuxième et une troisième couches (VCL_{f}, VCL_{c}, VCLₙ) de l'application ; un moyen d'insertion (320) pour ajouter dans le deuxième paquet RTP au moins les premières données (v_{f}) définissant la première couche de l'application, à laquelle le premier paquet fait référence, et les deuxièmes données (vₙ) définissant la troisième couche de l'application, à laquelle le troisième paquet fait référence ; et
- un moyen de transmission (340) pour transmettre le premier, le deuxième et le troisième paquets dans cet ordre.

10. Appareil selon la revendication 9, dans lequel les premières et les deuxièmes données sont ajoutées dans des octets de remplissage du deuxième paquet.

11. Appareil (400) permettant de préparer le décodage de paquets RTP comprenant des données d'application multicouche, l'appareil comprenant :
- un moyen de réception (401) pour recevoir au moins un premier paquet RTP, puis un deuxième ;
- un premier moyen d'extraction (410) pour extraire du corps du premier paquet RTP une première partie des données d'application multicouche (415) et des octets de remplissage du premier paquet RTP les premières informations de voisinage (NBₙ), lesdites premières informations de voisinage définissant au moins la couche de données d'application multicouche du deuxième paquet RTP ;
- un deuxième moyen d'extraction (420) pour extraire du corps du deuxième paquet RTP une deuxième partie des données d'application multicouche (425) et des octets de remplissage du deuxième paquet RTP les deuxièmes informations de voisinage (NB_{f}), lesdites deuxièmes informations de voisinage définissant au moins la couche de données d'application multicouche du premier paquet RTP ;
- des moyens de détermination (430,440) pour déterminer le type de données d'application multicouche (typₙ₊₁, typₙ₊₁) du premier paquet RTP et du deuxième paquet RTP ;
- un premier moyen de comparaison (450) pour comparer le type déterminé (typₙ₊₁) des données d'application multicouche du deuxième paquet RTP aux premières informations de voisinage (NBₙ) extraites du premier paquet RTP ; un deuxième moyen de comparaison (460) pour comparer le type déterminé (typₙ) des données d'application multicouche du premier paquet RTP aux deuxièmes informations de voisinage (NB_{f}) extraites du deuxième paquet RTP ;
- un troisième moyen de comparaison (470) pour comparer les premières informations de voisinage (NBₙ) extraites du premier paquet RTP aux deuxièmes informations de voisinage (NB_{f}) extraites du deuxième paquet RTP ; et un moyen de mise à disposition de moyens pour transmettre les résultats des premier et deuxième moyens d'extraction (430,440), et des premier, deuxième et troisième moyens de comparaison (450,460,470) à un décideur pour ladite application multicouche.

12. Appareil selon la revendication 11, dans lequel les informations de voisinage (NBₙ,NB_{f}) du premier et du deuxième paquets RTP comprennent au moins une indication de type (Vₙ,V_{f}), une information de qualité (Qₙ, Q_{f}), une information de dépendance prédictive (Dₙ,D_{f}), un numéro IDR (PIC_idxₙ, PIC_idx_{f}) et une information de compte d'ordre d'image (POCₙ,POC_{f}) pour la NAL.

13. Appareil selon la revendication 11 ou 12, dans lequel la première partie et la deuxième partie des données d'application multicouche appartiennent à différentes couches de l'application multicouche.
